(19) Europäisches Patentamt / European Patent Office / Office européen des brevets

(11) **EP 4 715 068 A1**

(12) **EUROPEAN PATENT APPLICATION**
published in accordance with Art. 153(4) EPC

(43) Date of publication:
**25.03.2026 Bulletin 2026/13**

(21) Application number: **25817723.7**

(22) Date of filing: **24.06.2025**

(51) International Patent Classification (IPC):
*C21B 5/00* $^{(2006.01)}$          *C21B 5/04* $^{(2006.01)}$
*C21B 5/06* $^{(2006.01)}$

(52) Cooperative Patent Classification (CPC):
**C21B 5/00; C21B 5/04; C21B 5/06;** Y02P 10/122

(86) International application number:
**PCT/CN2025/102992**

(87) International publication number:
**WO 2026/001945 (02.01.2026 Gazette 2026/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **27.06.2024   CN 202410846712**

(71) Applicant: **Pangang Group Xichang Steel & Vanadium Co., Ltd.
Liangshan, Sichuan 615099 (CN)**

(72) Inventor: **HUANG, Yun
Liangshan, Sichuan 615099 (CN)**

(74) Representative: **Studio Torta S.p.A.
Via Viotti, 9
10121 Torino (IT)**

(54) **METHOD FOR SMELTING HIGH-PROPORTION SEFSTROMITE BY USING OXYGEN BLAST FURNACE**

(57)    A method for smelting high-proportion vanadium-titanium iron ore in oxygen blast furnace, comprising the following steps: conducting pure oxygen injection in the blast furnace, and injecting pure oxygen, hot gas and pulverized coal through a tuyere; and charging iron-bearing material and coke from a top of the blast furnace; where a volume percentage of $N_2$ in the top gas is <25%, and the top gas is recycled after removing $CO_2$. The method for smelting high-proportion vanadium-titanium iron ore in an oxygen blast furnace of the present disclosure can achieve smelting with the proportion of the vanadium-titanium iron ore in the blast furnace greater than 60%, the mass fraction of $TiO_2$ in the blast furnace slag > 15% and < 45%, and the $CO_2$ emission reduced by more than 30%. It solves problems such as viscous slag, difficult separation of slag and iron, unsmooth furnace conditions, high cost and high carbon emissions when increasing the proportion of vanadium-titanium iron ore in the existing blast furnace smelting, thereby improving the utilization efficiency of vanadium-titanium resources and reducing smelting costs and carbon emissions.

FIG. 1

**Description**

This application claims priority to Chinese Patent Application No. 202410846712.9, titled "METHOD FOR SMELTING HIGH-PROPORTION VANADIUM-TITANIUM IRON ORE IN OXYGEN BLAST FURNACE", filed on June 27, 2024 with the China National Intellectual Property Administration, which is incorporated herein by reference in its entirety.

**FIELD**

The present disclosure relates to the technical field of metallurgy, and in particular to a method for smelting high-proportion vanadium-titanium iron ore in oxygen blast furnace.

**BACKGROUND**

At present, mature ironmaking processes primarily include blast furnace ironmaking, smelting reduction (HIsmelt, COREX, Finex), direct reduction (gas-based direct reduction, coal-based direct reduction), and the like. The processes have their own advantages and disadvantages, mainly as follows:

(1) Blast furnace ironmaking process: This technology is mature and can achieve an annual production capacity of more than one million tonnes per unit of equipment. However, its disadvantages are excessive reliance on high-quality metallurgical coke, requiring supporting construction of coking, sintering, and pelletizing, with large system investment; high difficulty in blast furnace operation, and difficult recovery after abnormal and fluctuating furnace conditions; high cost, carbon emissions and energy consumption. Moreover, the $N_2$ content in traditional blast furnace accounts for over 40% of the total gas phase. The high $N_2$ content facilitates the formation of Ti(C,N), leading to foamy slag inside the furnace, which is detrimental to smooth production and index optimization.

(2) Smelting reduction: ① The HIsmelt process has poor heat transfer effect. The temperature of molten iron in the molten iron pool is low, only 1400°C to 1450°C. The flue gas flow rate is as high as 2700 $Nm^3/t_{Fe}$ (normal cubic metres per tonne of iron) and the flue gas temperature reaches 1600°C. A large amount of physical heat is discharged from the furnace along with the flue gas, resulting in energy losses. The iron loss is high, the fuel consumption is high, and the carbon emissions are high. ② In the COREX or Finex process, the silicon content [Si] in molten iron is excessively high, accompanied by excessive gas generation and high primary carbon consumption. ③ The chemical energy utilization rate of carbon is insufficient, and a part of the carbon element escapes with the gas in the form of CO, and its chemical energy cannot be further utilized.

(3) Direct reduction: ① Hydrogen-based shaft furnaces require high-quality iron ore; ② Coal-based direct reduction requires solid fuel, resulting high carbon consumption, and the same problem exists as gas-based vertical furnaces in demanding high-quality iron ore.

Vanadium-titanium magnetite is a polymetallic composite ore, and is a symbiotic magnetic iron ore mainly containing iron, vanadium, and titanium. Vanadium-titanium magnetite is the world's primary raw material for vanadium production and the primary mineral raw material for refining titanium and iron. Moreover, the vanadium-titanium magnetite is globally recognized as one of the most difficult-to-smelt ores, with significant difficulties in its comprehensive utilization.

Currently, the primary smelting process for vanadium-titanium iron ore is blast furnace smelting. The blast furnace smelting of vanadium-titanium iron ore has two technical challenges:

First, it is difficult to increase the proportion of vanadium-titanium iron ore. In the existing technology, when the proportion of vanadium-titanium iron ore in the blast furnace (the proportion of vanadium-titanium iron ore in the blast furnace in the present disclosure refers to a ratio of the amount of the vanadium-titanium iron ore in the iron-containing raw materials used to produce sintered ore and pellet ore to a sum of the total amount of iron-containing raw materials used to produce sintered ore and pellet ore and the amount of iron-containing lump ore used in the blast furnace) is increased, the $TiO_2$ content in the blast furnace slag is increased, and Ti(C,N), TiC, and TiN are produced, resulting in phenomena such as viscous slag, difficulty in separating slag from iron, and foamy slag. Furthermore, in a case that the proportion of vanadium-titanium iron ore in the blast furnace is increased by increasing the proportion of vanadium-titanium iron ore in the sintered raw materials, with the increased $TiO_2$ content in the sintered ore, a series of technical problems can be caused, including reduced tumbler strength of sintered ore, increased reduction degradation, deteriorated blast furnace smooth operation, unsmooth furnace conditions, increased sinter return rate, and increased fuel costs per ton of iron.

Second, the process has high carbon emissions and energy consumption. The CO content in the blast furnace top gas accounts for approximately 20% to 30%. In the existing technologies, the chemical energy of the CO is not effectively utilized, but is utilized by combustion power generation. The thermal energy conversion efficiency of blast furnace gas power generation is less than 40%. Consequently, this results in high system energy consumption and increased carbon emissions.

## SUMMARY

The present disclosure aims to provide a method for smelting high-proportion vanadium-titanium iron ore in an oxygen blast furnace. The method is for solving the technical problems of increasing the proportion of vanadium-titanium iron ore, high carbon emissions, and high costs in blast furnace smelting of vanadium-titanium iron ore in the existing technologies.

To achieve the above objectives, one embodiment of the present disclosure provides a method for smelting high-proportion vanadium-titanium iron ore in an oxygen blast furnace, comprising the following steps:

conducting pure oxygen injection in the blast furnace, and injecting pure oxygen, hot gas and pulverized coal through a tuyere; and charging iron-bearing material and coke from a top of the blast furnace; where a volume percentage of $N_2$ in the top gas is <25%, and the top gas is recycled after removing $CO_2$;

the iron-bearing material is pellet ore, or pellet ore and at least one of the following materials: sintered ore and lump ore;

the pellet ore has a $TiO_2$ content of 3%-13%, an iron raw material used for producing the pellet ore is vanadium-titanium iron ore, a mass proportion of the pellet ore in the iron-bearing material charged into the blast furnace is >30%, and a mass fraction of $TiO_2$ in the sintered ore is <5%;

a mass fraction of $TiO_2$ in blast furnace slag produced by smelting is >15% and <45%, a proportion of vanadium-titanium iron ore in the blast furnace is >60%, and a $CO_2$ emission of the blast furnace is reduced by 30%.

In a preferred embodiment of the present disclosure, the hot gas is gas heated in a gas heating furnace, a gas source in the gas heating furnace comprises coke oven gas, water vapor, and purified gas, wherein a flow rate of the coke oven gas fed into the gas heating furnace is 20 $Nm^3$/t to 200 $Nm^3$/t, and a molar ratio of the water vapor to the coke oven gas fed into the heating furnace is 0.10 to 0.30:1.

In a preferred embodiment of the present disclosure, in the blast furnace smelting process,

when the mass fraction of $TiO_2$ in the blast furnace slag is > 15% and $\leq$ 18%, a sum of a mass fraction of [Si] and a mass fraction of [Ti] in molten iron is $\geq$ 0.4% and $\leq$ 0.8%;

when the mass fraction of $TiO_2$ in the blast furnace slag is > 18% and $\leq$ 20%, the sum of the mass fraction of [Si] and the mass fraction of [Ti] in the molten iron is $\geq$ 0.3% and $\leq$ 0.7%;

when the mass fraction of $TiO_2$ in the blast furnace slag is > 20% and $\leq$ 25%, the sum of the mass fraction of [Si] and the mass fraction of [Ti] in the molten iron is $\geq$ 0.10% and $\leq$ 0.6%;

when the mass fraction of $TiO_2$ in the blast furnace slag is > 25%, the sum of the mass fraction of [Si] and the mass fraction of [Ti] in the molten iron is $\geq$ 0.05% and $\leq$ 0.55%.

In a preferred embodiment of the present disclosure, a mass ratio of the blast furnace iron-bearing material to coke is 5.5 to 7.5:1, and a mass ratio of the blast furnace iron-bearing material to pulverized coal is 15 to 40:1; in the blast furnace smelting, a blast furnace fuel ratio is < 400kg/t, and a coke ratio is < 300kg/t.

In a preferred embodiment of the present disclosure, in the blast furnace smelting process, a distribution coefficient of vanadium in molten iron and slag [V]/($V_2O_5$)is >1.1.

In a preferred embodiment of the present disclosure, a flow rate of the hot gas injected is 700$Nm^3$/t to 1280$Nm^3$/t, and a flow rate of the pure oxygen injected is 145$Nm^3$/t to 245$Nm^3$/t.

In a preferred embodiment of the present disclosure, a method of charging the iron-bearing material and coke is as follows: at a blast furnace burden surface height, taking a horizontal cross-section of the blast furnace and dividing a circle where the cross-section is located into 11 equal-area circular rings, which are numbered in sequence from the inner ring to the outer ring, wherein a distribution system is as follows: 60% to 80% of the coke is distributed in the 9th to 11th rings and the 1st to 5th rings, 20%-40% of the coke is distributed in the 6th to 8th rings, 70%-90% of the iron-bearing material is distributed in the 4th to 10th rings, and 10%-30% of the iron-bearing material is distributed in the 1st to 3rd rings and the 11th ring.

In summary, the present disclosure has the following beneficial effects:

1. It solves the problem of viscous slag and foamy slag in the smelting of vanadium-titanium iron ore. The volume

percentage of $N_2$ in the top gas in the smelting method of the present disclosure is less than 25%, which is significantly lower than the volume percentage of $N_2$ in the traditional blast furnace gas of 45%-60%. Compared to the conventional blast furnace, in the smelting process of the present disclosure, the $N_2$ partial pressure is reduced, the CO partial pressure is increased, and the furnace temperature is controlled reasonably, all of which effectively suppress the formation of Ti(C, N). This fundamentally prevents the slag-iron from becoming viscous and difficult to separate, controls foamy slag, and thereby solves one of the key problems restricting the increase in the proportion of vanadium-titanium iron ore used in blast furnaces.

2. It solves the problem of poor metallurgical properties of vanadium-titanium sintered ore. Through optimized ore blending, the present disclosure controls the $TiO_2$ content in the sintered ore to less than 5%, and maximizes the proportion of vanadium-titanium iron ore in the pellet blend. This solves a series of technical issues associated with reduced tumbler strength, high reduction degradation, and high sinter return rate, such as deteriorated blast furnace smooth operation, unsmooth furnace conditions, and increased fuel costs per ton of sintered iron. This further addresses another key problem limiting the increase in the proportion of vanadium-titanium iron ore in the blast furnace.

3. The present disclosure significantly reduces ore blending costs. Through optimized ore blending, the present disclosure achieves a vanadium-titanium iron ore proportion of 60% to 100% and a comprehensive titanium load of 110 kg/t to 220 kg/t in the charged raw materials. The average price difference between Chinese vanadium-titanium iron ore and ordinary iron ore is 200 RMB/ton. Based on a conservative calculation (60% of vanadium-titanium iron ore ratio and 1.6 t/t of iron ore consumption per ton of molten iron), the ore blending costs can be reduced by 192 RMB per ton of molten iron.

4. The mass percentage of $TiO_2$ in the slag of the present disclosure is significantly increased. In conventional blast furnace smelting of vanadium-titanium iron ore, when the mass percentage of $TiO_2$ in the vanadium-titanium iron ore is less than 12%, the mass percentage of $TiO_2$ in the blast furnace slag is less than 23%. The present disclosure achieves the mass percentage of $TiO_2$ in the blast furnace slag in a range of 15% to 45%. Specifically, when the mass percentage of $TiO_2$ in the vanadium-titanium iron ore reaches 8%, the mass percentage of $TiO_2$ in the blast furnace slag can reach 27%. When the mass percentage of $TiO_2$ in the vanadium-titanium iron ore reaches 10%, the mass percentage of $TiO_2$ in the blast furnace slag can reach 30%. When the mass percentage of $TiO_2$ in the vanadium-titanium iron ore is greater than 12%, the mass percentage of $TiO_2$ in the blast furnace slag can reach 40%. The increased mass percentage of $TiO_2$ in the blast furnace slag significantly enhances the utilization value of the slag.

5. Blast furnace fuel costs are reduced, and $CO_2$ emissions are lowered. The present disclosure utilizes pure oxygen injection and the top gas is heated and reinjected into the furnace after $CO_2$ removal. The process increases the amount of CO reducing gas in the furnace and reduces the amount of solid fuel required for combustion at the tuyere (which serves to provide heat and CO reducing gas). The solid fuel consumption is reduced by 30% to 40%, and the combined fuel and power costs are reduced by approximately 50 to 100 RMB per ton of molten iron (cost reduction varies by region due to differences in fuel and power prices).

## BRIEF DESCRIPTION OF THE DRAWINGS

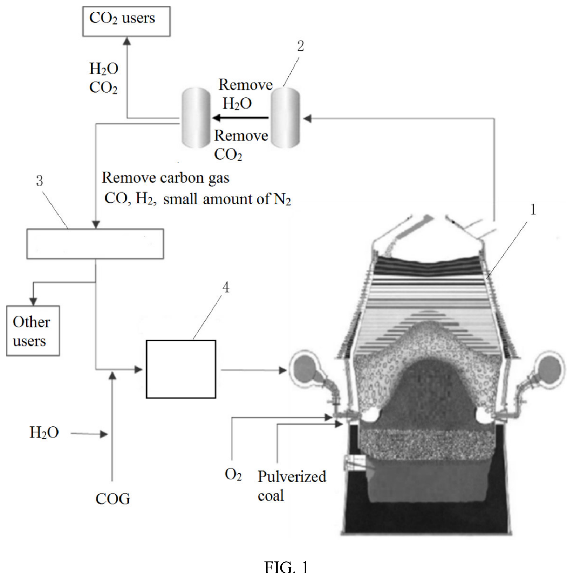

FIG. 1 is a smelting process flow chart according to one embodiment of the present disclosure, wherein 1: blast furnace; 2: gas purification facility; 3: gas pipeline network; 4: gas heating furnace.

## DETAILED DESCRIPTION OF EMBODIMENTS

The present disclosure provides a method for smelting high-proportion vanadium-titanium iron ore in an oxygen blast furnace. The involved apparatus comprises a blast furnace 1, a gas purification facility 2, and a gas heating furnace 4. The smelting method comprises the following steps: charging blast furnace iron-bearing material and coke into the blast furnace 1; conducting pure oxygen injection in the blast furnace 1, and injecting pure oxygen, hot gas, and pulverized coal through a tuyere to perform smelting, thereby generating liquid slag and molten iron, and discharging the slag and molten iron from the furnace through slag and iron outlets.

The specific process flow and process parameters are as follows:

(1) Process flow

Reference is made to FIG. 1, the process flow of smelting high-proportion vanadium-titanium iron ore in the oxygen blast furnace is as follows:

① The hot gas is blown into the blast furnace 1 through the tuyere stock of the blast air branch pipe, and then sequentially through the tuyere jacket, middle tuyere sleeve and tuyere insert. The pulverized coal is injected from the coal injection gun located in the tuyere stock of the blast air branch pipe, and the pulverized coal injected by the coal injection gun is blown into the blast furnace 1 sequentially through the tuyere jacket, middle tuyere sleeve and tuyere insert. The oxygen is injected into the blast furnace 1 from the tuyere insert.

② The blast furnace coke and iron-bearing material are charged into the furnace from the top of the blast furnace through charging equipment, where the iron-bearing material is the pellet ore or the iron-bearing material is the pellet ore and at least one of the following materials: the sintered ore and the lump ore. The blast furnace fuel includes but is not limited to pulverized coal and coke.

③ The gas generated by the combustion of oxygen and fuel in front of the tuyere, hot gas injected through the tuyere insert, and the gas produced by the chemical reaction in the furnace hearth, together form the furnace bosh gas. During the upward flow of the furnace bosh gas, it undergoes physical and chemical reactions with the descending iron-bearing material to generate the liquid slag and molten iron. The slag and molten iron are discharged from the slag and iron outlets.

④ The top gas produced by the reaction in the furnace is discharged from the furnace top gas pipeline. The top gas is purified through the gas purification facility 2 by removing dust, $CO_2$ and $H_2O$, to become purified gas, which is delivered to the gas pipeline network 3. A part of the purified gas is transmitted to other users for use, and the other part of the purified gas is mixed with the coke oven gas and water vapor and transported to the gas heating furnace 4. After heating, it becomes the hot gas. The above-mentioned entire smelting process realizes the carbon circulation.

(2) Material structure and slag formation system

Due to the poor sintering characteristics of the vanadium-titanium iron ore, the quality of the sintered ore prepared therefrom is poor, which is mainly manifested in low drop strength, low tumbler strength, low yield and severe low-temperature reduction degradation. This limits the industrial application of vanadium-titanium iron ore. When the proportion of vanadium-titanium iron ore in the sintered ore is excessively high, it can lead to a series of problems such as an increased blast furnace return rate, increased fuel cost per ton of iron, poor blast furnace permeability, and unsmooth furnace conditions. To increase the proportion of vanadium-titanium iron ore charged into the blast furnace while controlling costs and stabilizing furnace conditions, the present disclosure preferentially adds vanadium-titanium iron ore to the pellet blend, with only a small amount of the remaining portion added into the sintering blend, and controls the $TiO_2$ content in the sintered ore to < 5%. Specifically:

① During the pellet blending process, the proportion of vanadium-titanium iron ore in the iron-bearing material is set to the maximum value. For example, 100% vanadium-titanium iron ore is used for pelletizing, with no additional iron-bearing material added. The $TiO_2$ content in the pellet ore is determined by the $TiO_2$ content in the vanadium-titanium iron ore. Based on the current global availability of vanadium-titanium iron ore resources, the $TiO_2$ content in the pellet ore is in a range of 3% to 13%.

② During the blast furnace blending process, the proportion of vanadium-titanium iron ore in the blast furnace is increased by increasing the proportion of pellet ore (the proportion of pellet ore refers to the mass percentage of pellet ore in the iron-bearing material fed into the blast furnace). The optimal proportion of pellet ore in the blast furnace iron-bearing material is 100%. When the production capacity of the pelletizing line is insufficient, the sintered ore can be used as a substitute for the insufficient part. The minimum production capacity of the pelletizing line should ensure that the proportion of the pellet ore in the blast furnace iron-bearing material is greater than 30%.

③ When the proportion of pellet ore in the blast furnace has reached a upper limit, but the proportion of vanadium-titanium iron ore in the blast furnace needs to be further increased, for example, when the production capacity of the pelletizing line can only ensure that the maximum proportion of pellet ore in the blast furnace iron-bearing material is 30%, but the desired proportion of the vanadium-titanium iron ore in the blast furnace is greater than 60%, supplemental vanadium-titanium iron ore can be added to the sintered ore.

④ During the sintering blending process, the proportion of vanadium-titanium iron ore should not be excessively high, so as to mitigate the negative impact of $TiO_2$ on the quality of the sintered ore and blast furnace production. The $TiO_2$

content in the finished sintered ore should be controlled to < 5%.

According to the above method, when the proportion of pellet ore is not restricted, that is, when the proportion of pellet ore is 100%, the proportion of the vanadium-titanium iron ore in the blast furnace can be achieved to be 100%, and the mass percentage of $TiO_2$ in the blast furnace slag is >15% and < 45%. When the proportion of pellet ore is limited, it will affect the improvement of the mass percentage of $TiO_2$ in the blast furnace slag and the improvement of the proportion of vanadium-titanium iron ore in the blast furnace. Specifically, when the proportion of pellet ore is >30% and < 100%, for low-titanium vanadium-titanium iron ore with a $TiO_2$ content of <5.0%, the proportion of the vanadium-titanium iron ore can be achieved to be 100%, and the mass percentage of $TiO_2$ in the blast furnace slag is > 15% and < 22%. When the proportion of pellet ore is > 30% and < 100%, for medium-titanium vanadium-titanium iron ore with a $TiO_2$ content of $\geq$5% and <8%, the proportion of the vanadium-titanium iron ore can be achieved to be 100%, and the mass percentage of $TiO_2$ in the blast furnace slag is > 16% and < 26%. When the proportion of pellet ore is > 30% and < 100%, for high-titanium vanadium-titanium iron ore with a $TiO_2$ content of $\geq$8%, the proportion of the vanadium-titanium iron ore in the blast furnace can be achieved to be > 60%, and the mass percentage of $TiO_2$ in the blast furnace slag is > 23% and < 45%.

In summary: the mass percentage of $TiO_2$ in the blast furnace slag can be achieved to be > 15% and < 45%, and the proportion of the vanadium-titanium iron ore in the blast furnace can be achieved to be > 60%.

Through the above ore blending, the proportion of the vanadium-titanium iron ore in the blast furnace is achieved to be 60% to 100%. For the vanadium-titanium iron ore with a $TiO_2$ content of > 8%, the titanium load charged into the furnace can be achieved to be 110 kg/t to 220 kg/t by adjusting the proportion of vanadium-titanium pellet ore to more than 50%.

(3) Thermal system

The furnace temperature is the basis for stable production of the blast furnace and is further an important indicator for judging the furnace condition. For the vanadium-titanium iron ore smelting, an excessively low furnace temperature will lead to a thinner softening-melting zone, uneven distribution of the initial gas flow, and phenomena such as localized gas channels in the burden column, unsmooth burden descent, burden deviation, and burden collapse/sliding. An excessively high furnace temperature will lead to excessive Ti(C,N) formation, resulting in phenomena such as viscous slag and iron, foamy slag, difficulty in slag-iron separation, hearth accretion, increased blast furnace pressure differential, and disruption of normal production. By simulation analysis of the furnace temperature field distribution and calculation of the thermodynamic and kinetic conditions for Ti(C,N) formation, it was concluded that to ensure smooth furnace conditions, the target control range for the furnace temperature must be determined based on the mass percentage of $TiO_2$ in the blast furnace slag.

On the other hand, for the vanadium-titanium iron ore smelting, it is crucial to maximize the reduction and dissolution of vanadium into the molten iron to enhance the utilization efficiency of vanadium resource. The furnace temperature is a key factor in determining the distribution coefficient (Lv) of vanadium between molten iron and slag. Maintaining a suitable furnace temperature is crucial for achieving a good vanadium distribution coefficient (Lv). Herein, the vanadium distribution coefficient (Lv) = [V]/($V_2O_5$), where [V] refers to the mass percentage of vanadium in the molten iron, and ($V_2O_5$) refers to the mass percentage of $V_2O_5$ in the slag.

The present disclosure adjusts the furnace temperature by adjusting the mass ratio of the iron-bearing material to fuel fed into the furnace, the injected pulverized coal, and the temperature of hot gas. The furnace temperature is then fed back by monitoring the mass fractions of [Si] and [Ti] in the molten iron. Specifically:

① Reasonable furnace temperature control range

when the mass fraction of $TiO_2$ in blast furnace slag is > 15% and $\leq$ 18%, a sum of a mass fraction of [Si] and a mass fraction of [Ti] in the molten iron is $\geq$ 0.4% and $\leq$ 0.8%;

when the mass fraction of $TiO_2$ in blast furnace slag is > 18% and $\leq$ 20%, the sum of the mass fraction of [Si] and the mass fraction of [Ti] in the molten iron is $\geq$ 0.3% and $\leq$ 0.7%;

when the mass fraction of $TiO_2$ in blast furnace slag is > 20% and $\leq$ 25%, the sum of the mass fraction of [Si] and the mass fraction of [Ti] in the molten iron is $\geq$ 0.10% and $\leq$ 0.6%;

when the mass fraction of $TiO_2$ in blast furnace slag is > 25%, the sum of the mass fraction of [Si] and the mass fraction of [Ti] in the molten iron is $\geq$ 0.05% and $\leq$ 0.55%.

② Reasonable iron-bearing material to coke ratio and iron to coal ratio

The blast furnace iron-bearing material and coke are charged from the top of the blast furnace at a mass ratio of 5.5 to 7.5:1. The iron-bearing material and pulverized coal are charged and injected into the furnace at a mass ratio of 15 to 40:1.

When the furnace temperature is temporarily low, the amount of coal injected into the blast furnace can be adjusted to reduce the ratio of the iron-bearing material to the pulverized coal. When the furnace temperature is temporarily high, the amount of coal injected into the blast furnace can be adjusted to increase the ratio of the iron-bearing material to the pulverized coal.

When the furnace temperature is chronically low, the amount of coke fed into the blast furnace can be adjusted to reduce the ratio of the iron-bearing material to coke. When the furnace temperature is chronically high, the amount of coke fed into the blast furnace can be adjusted to increase the ratio of the iron-bearing material to coke.

By controlling the above parameters, combined with a reasonable charging system and injection parameters, a blast furnace fuel ratio of < 400 kg/t and a coke ratio of < 300 kg/t can be achieved. Typical values ranges are: coal ratio of 50-100 kg/t and coke ratio of 260 kg/t to 280 kg/t. The distribution coefficient $[V]/(V_2O_5)$ of vanadium between molten iron and slag is > 1.1.

(4) Charging system

The charging system of the blast furnace plays an important role in the distribution of gas flow, the energy utilization efficiency and the smooth furnace operation. Charging of the blast furnace is achieved through the top charging equipment. Currently, the charging equipment consists of two types: the bell top and the bell-less top. The parameters of the same type of charging equipment for blast furnaces with different volumes are significantly different. For example, for the same bell-less top, different distribution angles result in different burden falling points in the furnace. Therefore, a unified method is needed to specify the distribution in the furnace. The present disclosure focuses on the bell-less top furnaces and provides a reasonable distribution method.

The specific distribution method is as follows: at a blast furnace burden surface height, taking a horizontal cross-section of the blast furnace and dividing a circle where the cross-section is located into 11 equal-area circular rings, which are numbered from the inner ring to the outer ring as 1st ring, 2nd ring, 3rd ring, 4th ring, 5th ring, 6th ring, 7th ring, 8th ring, 9th ring, 10th ring and 11th ring respectively. The distribution system is as follows: 60% to 80% of the coke is distributed in the 9th to 11th rings and the 1st to 5th rings, 20%-40% of the coke is distributed in the 6th to 8th rings, 70%-90% of the iron-bearing material is distributed in the 4th to 10th rings, and 10%-30% of the iron-bearing material is distributed in the 1st to 3rd rings and the 11th ring.

Since both vanadium-titanium sintered ore and pellet ore undergo more severe degradation during the reduction process in the blast furnace compared to conventional ores, higher strength requirements are typically imposed on the iron-bearing feed to maintain good permeability in the oxygen blast furnace. Generally, the compressive strength of the pellet ore is required to be $\geq$ 2500N, which increases raw material processing costs, energy consumption, and carbon emissions. By adopting the distribution system, the present disclosure enables the blast furnace to maintain appropriate permeability, smooth burden descent, and high iron output even with lower iron ore strength after increasing the vanadium-titanium ore proportion. Test verification shows that with the above distribution system, the minimum compressive strength of the pellet ore can be reduced to 1800N without affecting the normal production and technical and economic indicators of the blast furnace.

(5) Tuyere injection parameters

In the blast furnace production, the combustion reaction of carbon in front of the tuyere (reaction product CO) is the main source of heat and the reducing agent for the blast furnace. The materials injected through the tuyere of the traditional blast furnace comprise hot air, oxygen and pulverized coal. Under conditions of releasing the same heat and CO, the traditional blast furnace process introduces a large amount of $N_2$. This portion of $N_2$ does not participate in the reduction reaction of iron oxides, but plays a role in increasing the blast kinetic energy, stirring and activating the furnace hearth.

In particular, in the vanadium-titanium ore smelting process, in order to suppress the generation of Ti(C,N), the requirements for blast kinetic energy are more stringent. Insufficient blast kinetic energy may cause local inactivity of the furnace hearth. In the inactive part of the furnace hearth, the residence time of Ti elements in the furnace increases, which increases the generation of Ti(C,N). This subsequently results in viscous slag and difficulty in slag-iron separation. Bosh gas volume is a key parameter affecting blast energy and hearth activity.

Unlike the injection process of traditional blast furnaces, in the method for smelting high-proportion vanadium-titanium iron ore in the oxygen blast furnace in the present disclosure, the materials injected through the tuyere in the blast furnace comprise hot gas, oxygen, and pulverized coal. Only a small amount of carbon combustion is required to meet the furnace's heat and reducing agent requirements. However, in order to maintain reasonable blast kinetic energy and hearth activity, the bosh gas volume should be controlled within an appropriate range. Production tests have demonstrated that for smelting the high-proportion vanadium-titanium iron ore in the oxygen blast furnace, the bosh gas volume should be controlled within the range of 1200 $Nm^3/t$ to 1750 $Nm^3/t$. Based on the bosh gas volume parameter and the amount of coke to be burned in the furnace, the tuyere injection parameters are further determined as follows:

In the present disclosure, the amount of the hot gas injected into the furnace is 700 $Nm^3/t$ to 1280 $Nm^3/t$, and the amount of oxygen injected into the furnace is 145 $Nm^3/t$ to 245 $Nm^3/t$. The hot gas is the gas heated by the gas heating furnace, which contains coke oven gas, water vapor, and purified gas. The coke oven gas input into the gas heating furnace is 20 $Nm^3/t$ to 200 $Nm^3/t$, and a molar ratio of the water vapor to the coke oven gas fed into the gas heating furnace is 0.10 to 0.30 mol: 1mol.

In the present disclosure, a portion of the coke oven gas, water vapor, and purified gas are mixed and the mixed gas is delivered to the gas heating furnace. The purpose of adding water vapor to the mixed gas is to initiate a series of reforming reactions between the water vapor and the coke oven gas, which reform complex hydrocarbons into $H_2$ and CO, for example, $CH_4 + H_2O \rightarrow CO + H_2$, and $C_2H_2 + H_2O \rightarrow CO + H_2$. The mixing ratio of the water vapor is determined based on the composition of the coke oven gas and the thermodynamic and kinetic calculations of the reactions within the heating furnace. The optimal molar ratio of water vapor to coke oven gas within the gas heating furnace is 0.10 to 0.30:1.

By controlling the injection parameters as described above, the top gas generated by the blast furnace is purified through removal of dust, $CO_2$ and $H_2O$ to produce purified gas. The amount of the purified gas exceeds the amount of the purified gas required by the gas heating furnace, with the surplus portion supplied to external users, thus achieving a semi-closed recovery of gas.

Since the compressed air used to inject pulverized coal comprises approximately 79% $N_2$, the furnace top equipment requires $N_2$ for sealing and purging, and the coke oven gas further comprises 6% to 10% $N_2$. Therefore, the present disclosure cannot achieve smelting in a zero-nitrogen environment. After removing dust, $CO_2$ and $H_2O$ from the gas, $N_2$ enrichment tends to occur during the recycling process. However, by controlling the injection parameters as described above and implementing the semi-closed recovery of gas, i.e., exporting part of the purified gas with enriched $N_2$ for use by other users, supplementing it with a portion of coke oven gas reformate with low $N_2$ content, and injecting the heated mixture into the furnace, the volume percentage of $N_2$ in the furnace top gas after system equilibrium can be reduced to < 25%, and more preferably within a range of 7% to 15%. This is a significant reduction compared to the 45% to 60% $N_2$ volume percentage in conventional blast furnace gas.

Supplementing the coke oven gas reformate in the heating furnace serves two purposes: first, it increases blast kinetic energy and ensures furnace hearth activity; second, it dilutes the $N_2$ content in the furnace gas.

Thermodynamic calculations show that for the smelting of vanadium-titanium iron ore in blast furnace, the generation of Ti(C, N) in the furnace is closely related to the $N_2$ content. The starting temperatures of reactions (1) and (2) are 1136°C and 1108°C respectively, meaning TiN is generated slightly earlier than TiC. In fact, the pure TiN and TiC rarely exist in the blast furnace. Instead, complex solid solutions are formed that promotes each other's generation.

$TiO_2 + 3C = TiC + 2CO$

$$\Delta G^\theta = 524130 - 333.55T \, (J/mol) \qquad (1)$$

$$TiO_2 + 2C + \frac{1}{2}N_2 = TiN + 2CO$$

$$\Delta G^\theta = 379189 - 257.54T \, (J/mol) \qquad (2)$$

The critical value $\alpha_{TiO_2}$ for TiC precipitation is: $\alpha_{TiO_2} = 2 \lg P_{CO} + \lg \alpha_{TiC} + 27388/T - 17.436$;

The critical value $\alpha_{TiO_2}$ for TiN precipitation is: $\alpha_{TiO_2} = 2 \lg P_{CO} + \lg \alpha_{TiN} - \frac{1}{2} \lg P_{N_2} + 18345/T - 15.86$ ;

The critical value $\alpha_{TiO_2}$ for Ti(C,N) precipitation is: $\alpha_{TiO_2} = 2 \lg P_{CO} + \lg \alpha_{TiC} + 27389/T - 17.436$.

Due to the high $N_2$ content in conventional blast furnace, when the mass proportion of slag ($TiO_2$) reaches 23%, the Ti(C,N) generated in the furnace will prevent the blast furnace from operating normally. In the present disclosure, the $N_2$ partial pressure is reduced and the CO partial pressure is increased, and controlling the furnace temperature T by monitoring the sum of the [Si] and [Ti] mass fractions in the molten iron effectively suppress the formation of Ti(C,N). Experiments have shown that by controlling the $N_2$ volume fraction in the top gas to < 25%, even when the slag ($TiO_2$) mass fraction to reach 45%, the slag-iron separation effect and slag fluidity maintain excellent, and the blast furnace may maintain stable and normal production.

In addition, in the smelting method of the present disclosure, a portion of the coke oven gas, water vapor, and purified gas are mixed and fed into the gas heating furnace, where the mixed gas is heated to form the hot gas. The temperature of the hot gas ranges from 900°C to 2300°C. Within the range of 900°C to 2300°C, the higher the hot gas temperature, the more beneficial it is for reducing the blast furnace's solid fuel ratio and carbon emissions. The solid fuel ratio comprises both the coal ratio and the coke ratio. Furthermore, the gas heating furnace can utilize electric heating, hot blast furnace heating, or plasma gas heating. The ultimate goal is to produce high-temperature gas at a low cost. Depending on current technology, different heating equipment can achieve different hot gas temperatures. The most economical method is recommended to utilize hot blast furnace heating to achieve a gas temperature of 1250°C to 1280°C.

Example 1: Smelting of high-titanium slag from high-titanium vanadium-titanium iron ore resources

The composition of a high-titanium vanadium-titanium iron ore from a certain region is shown in Table 1:

Table 1: Composition of vanadium-titanium iron ore in Example 1

| Composition | TFe | $TiO_2$ | $V_2O_5$ | MgO | $Al_2O_3$ | CaO | $SiO_2$ |
|---|---|---|---|---|---|---|---|
| Mass percentage/% | 56.90 2 | 10.24 2 | 0.71 4 | 3.06 6 | 3.334 | 0.49 3 | 2.80 6 |

The pellet ore was prepared using the above-mentioned vanadium-titanium iron ore without adding any other iron-containing raw materials during the blending process. The composition of the pellet ore produced is shown in Table 2:

Table 2: Composition of the pellet ore produced from the vanadium-titanium iron ore in Example 1

| Composition | TFe | $TiO_2$ | $V_2O_5$ | MgO | $Al_2O_3$ | CaO | $SiO_2$ |
|---|---|---|---|---|---|---|---|
| Mass percentage/% | 52.4 | 9.4 | 0.7 | 3.2 | 3.5 | 4 | 3.6 |

The blast furnace iron-bearing material contained 100% pellet ore (without adding sintered ore or lump ore), and the proportion of the vanadium-titanium iron ore in the blast furnace was 100%. The composition of the produced blast furnace slag is shown in Table 3:

Table 3: Composition of the produced blast furnace slag in Example 1

| Composition | $SiO_2$ | CaO | MgO | $Al_2O_3$ | $TiO_2$ | $V_2O_5$ |
|---|---|---|---|---|---|---|
| Mass percentage/% | 18.30 | 20.13 | 12.71 | 14.98 | 31.25 | 0.38 |

Smelting was carried out in accordance with the method for smelting high-proportion vanadium-titanium iron ore in an oxygen blast furnace (including the thermal system, charging method, and tuyere gas injection parameters) according to the present disclosure. The actual results obtained are as follows: a vanadium [V] content in the molten iron was 0.536%, a coke ratio was 260 kg/t, a coal ratio was 100 kg/t, a vanadium distribution coefficient between the molten iron and slag was that $[V]/(V_2O_5) = 1.35 > 1.3$, a total titanium loading of the raw materials entering the furnace was 180 kg/t, and a slag ($TiO_2$) content reached 31.25%, which was much higher than the current international advanced level (titanium loading into the furnace was 110 kg/t to 130 kg/t, the $TiO_2$ slag content was 22% to 23%). Compared with the conventional blast furnace, in the present disclosure, the smelting method reduced the fuel and power costs by 57 RMB per ton of iron. Furthermore, since the price of vanadium-titanium iron ore was lower than that of ordinary iron ore, the ore blending cost of the present disclosure was reduced by 420 RMB per ton, and the $CO_2$ emissions was reduced by 33.3%.

Example 2: Smelting of titanium slag from high-titanium vanadium-titanium iron ore resources

The composition of high-titanium vanadium-titanium iron ore from a certain region is shown in Table 4:

Table 4: Composition of vanadium-titanium iron ore in Example 2

| Composition | TFe | $TiO_2$ | $V_2O_5$ | MgO | $Al_2O_3$ | CaO | $SiO_2$ |
|---|---|---|---|---|---|---|---|
| Mass percentage/% | 56.902 | 10.242 | 0.714 | 3.066 | 3.334 | 0.493 | 2.806 |

The pellet ore was prepared using the above-mentioned vanadium-titanium iron ore without adding any other iron-containing raw materials during the blending process. The composition of the pellet ore produced is shown in Table 5:

Table 5: Composition of the pellet ore produced from the vanadium-titanium iron ore in Example 2

| Composition | TFe | $TiO_2$ | $V_2O_5$ | MgO | $Al_2O_3$ | CaO | $SiO_2$ |
|---|---|---|---|---|---|---|---|
| Mass percentage/% | 54.915 | 9.703 | 0.685 | 2.968 | 3.38 | 0.668 | 3.546 |

Due to insufficient pellet ore production capacity, to achieve favorable metallurgical properties of sintered ore, for the vanadium-titanium iron ore with a $TiO_2$ content > 8%, it was recommended that pellet ore accounted for > 50% of the blast furnace iron-bearing material. For example, the blast furnace ore blend may consist of 60% pellet ore and 40% sintered ore, without adding the lump ore. The $TiO_2$ content of the sintered ore should be controlled < 3.5 to achieve favorable metallurgical properties of the sintered ore. To this end, the vanadium-titanium iron ore was prioritized for pellet production, with the remaining portion used for sinter production. The iron raw materials for sintering production were partly vanadium-titanium iron ore and partly other iron ores. By controlling the $TiO_2$ content of the vanadium-titanium sintered ore to < 3.5, the metallurgical properties of the vanadium-titanium sintered ore can be significantly improved. This eliminated the need for specialized control of the MgO content in the sintered ore, reduced the amount of high-MgO flux added during the sintered ore production, and thus reduced production costs. The composition of the sintered ore is shown in Table 6. The proportion of the vanadium-titanium iron ore in the blast furnace obtained by the method was > 75%.

Table 6: Composition of the sintered ore in Example 2

| Composition | TFe | $SiO_2$ | CaO | MgO | $Al_2O_3$ | $TiO_2$ | $V_2O_5$ |
|---|---|---|---|---|---|---|---|
| Mass percentage/% | 47.96 | 6.72 | 16.80 | 1.75 | 2.64 | 3.13 | 0.20 |

Compared to the conventional smelting, after implementation, the tumbler strength of the sintered ore increased from an average of 72.0% to an average of 77.3%, achieving a tumbler strength of >76% after implementation. The low-temperature reduction degradation index of the sintered ore improved from an average of 55% to an average of 26.1%, achieving the low-temperature reduction degradation index of <30%.

The composition of the generated blast furnace slag is shown in Table 7. Experimental results confirm that, to improve slag fluidity, the smelting of high-proportion vanadium-titanium iron ore required controlling the slag basicity $R_2$ to <1.12.

Table 7: Composition of the produced blast furnace slag in Example 2

| Composition | $SiO_2$ | CaO | MgO | $Al_2O_3$ | $TiO_2$ | $V_2O_5$ |
|---|---|---|---|---|---|---|
| Mass percentage/% | 24.824 | 26.195 | 8.565 | 14.065 | 23.571 | 0.290 |

Smelting was carried out in accordance with the method for smelting high-proportion vanadium-titanium iron ore in an oxygen blast furnace (including the thermal system, charging method, and tuyere gas injection parameters) according to the present disclosure. The actual results obtained are as follows: a vanadium [V] content in the molten iron was 0.313%, a coke ratio was 270 kg/t, a coal ratio was 100 kg/t, a vanadium distribution coefficient between the molten iron and slag was that $[V]/(V_2O_5)$ = 1.38 > 1.3, a total titanium loading of the raw materials entering the furnace was 135 kg/t, and a slag ($TiO_2$) content reached 23.57%, which was much higher than the current international advanced level. Compared with the conventional blast furnace, in the present disclosure, the smelting method reduced the fuel and power costs by 57 RMB per ton of iron. Furthermore, since the price of vanadium-titanium iron ore was lower than that of ordinary iron ore, the ore blending cost was reduced by 13 RMB per ton, and the $CO_2$ emissions was reduced by 31.5%.

Example 3: Smelting of titanium slag from low-titanium vanadium-titanium iron ore resources

The composition of low-titanium vanadium-titanium iron ore from a certain region is shown in Table 8:

Table 8: Composition of low-titanium vanadium-titanium iron ore in Example 3

| Composition | TFe | $TiO_2$ | $V_2O_5$ | MgO | $Al_2O_3$ | CaO | $SiO_2$ |
|---|---|---|---|---|---|---|---|
| Mass percentage/% | 62.92 | 4.13 | 0.81 | 2.9 | 3.1 | 0.5 | 2.9 |

The pellet ore was prepared using the above-mentioned vanadium-titanium iron ore without adding any other iron-containing raw materials during the blending process. Instead, the flux and binder were added during the blending process. The composition of the pellet ore produced is shown in Table 9:

Table 9: Composition of the pellet ore produced from the vanadium-titanium iron ore in Example 3

| Composition | TFe | $TiO_2$ | $V_2O_5$ | MgO | $Al_2O_3$ | CaO | $SiO_2$ |
|---|---|---|---|---|---|---|---|
| Mass percentage/% | 57.9 | 3.8 | 0.8 | 3.2 | 3.5 | 4.1 | 3.6 |

The blast furnace iron-bearing material contained 100% pellet ore (without adding sintered ore or lump ore), and the proportion of the vanadium-titanium iron ore in the blast furnace was 100%. The composition of the produced blast furnace slag is shown in Table 10:

Table 10: Composition of the produced blast furnace slag in Example 3

| Composition | $TiO_2$ | $V_2O_5$ | MgO | $Al_2O_3$ | CaO | $SiO_2$ |
|---|---|---|---|---|---|---|
| Mass percentage/% | 16.5 | 0.32 | 12.2 | 14.5 | 19.1 | 16.8 |

Smelting was carried out in accordance with the method for smelting high-proportion vanadium-titanium iron ore in an oxygen blast furnace (including the thermal system, charging method, and tuyere gas injection parameters) according to the present disclosure. The actual results obtained are as follows: a vanadium [V] content in the molten iron was 0.767%, a coke ratio was 260 kg/t, a coal ratio was 90 kg/t, a vanadium distribution coefficient between the molten iron and slag was that $[V]/(V_2O_5) = 1.51 > 1.3$. Compared with the conventional blast furnace, in the present disclosure, the smelting method reduced the fuel and power costs by 53 RMB per ton of iron. Furthermore, since the price of vanadium-titanium iron ore was lower than that of ordinary iron ore, the ore blending cost was reduced by 310 RMB per ton, and the $CO_2$ emissions was reduced by 35.2%.

Example 4: Smelting of titanium slag from low-titanium vanadium-titanium iron ore resources

The composition of the low-titanium vanadium-titanium iron ore from a certain region is shown in Table 11:

Table 11: Composition of low-Titanium vanadium-titanium iron ore in Example 4

| Composition | TFe | $TiO_2$ | $V_2O_5$ | MgO | $Al_2O_3$ | CaO | $SiO_2$ |
|---|---|---|---|---|---|---|---|
| Mass percentage/% | 62.92 | 4.13 | 0.81 | 2.9 | 3.1 | 0.5 | 2.9 |

Due to insufficient pellet ore production capacity, the blast furnace ore blend may consist of 55% acidic pellet ore and 45% alkaline sintered ore, without adding the lump ore. The pellet ore was produced using the above-mentioned vanadium-titanium iron ore, without adding any other iron-containing raw materials or flux during the pellet blending process, while the binder was added. The composition of the produced pellet ore is shown in Table 12:

Table 12: Composition of the pellet ore produced from the vanadium-titanium iron ore in Example 4

| Composition | TFe | $TiO_2$ | $V_2O_5$ | MgO | $Al_2O_3$ | CaO | $SiO_2$ |
|---|---|---|---|---|---|---|---|
| Mass percentage/% | 62.10 | 4.08 | 0.80 | 2.91 | 3.16 | 0.67 | 3.84 |

The vanadium-titanium iron ore was primarily used for pellet production, with the remaining portion used for sinter production. The $TiO_2$ content in the sintered ore was controlled to < 3.5 to achieve favorable metallurgical properties of the sintered ore. After balancing, it is found that when the vanadium-titanium iron ore accounted for 100% of the iron raw material used in sintering, the $TiO_2$ content in the sintered ore can be maintained < 3.5. In this case, the proportion of vanadium-titanium iron ore in the blast furnace was 100%. The composition of the sintered ore is shown in Table 13:

Table 13: Composition of the sintered ore produced from the vanadium-titanium iron ore in Example 4

| Composition | TFe | $TiO_2$ | $V_2O_5$ | MgO | $Al_2O_3$ | CaO | $SiO_2$ |
|---|---|---|---|---|---|---|---|
| Mass percentage/% | 49.83 | 3.27 | 0.64 | 2.70 | 2.91 | 9.94 | 4.56 |

The composition of the produced blast furnace slag is shown in Table 14:

Table 14: Composition of the produced blast furnace slag in Example 4

| Composition | $TiO_2$ | $V_2O_5$ | MgO | $Al_2O_3$ | CaO | $SiO_2$ |
|---|---|---|---|---|---|---|
| Mass percentage/% | 16.5 | 0.32 | 12.2 | 14.5 | 19.1 | 16.8 |

Smelting was carried out in accordance with the method for smelting high-proportion vanadium-titanium iron ore in an oxygen blast furnace (including the thermal system, charging method, and tuyere gas injection parameters) according to the present disclosure. The actual results obtained are as follows: a vanadium [V] content in the molten iron was 0.767%, a coke ratio was 260 kg/t, a coal ratio was 90 kg/t, a vanadium distribution coefficient between the molten iron and slag was that $[V]/(V_2O_5)$ = 1.53 > 1.3. Compared with the conventional blast furnace, in the present disclosure, the smelting method reduced the fuel and power costs by 53 RMB per ton of iron. Furthermore, since the price of vanadium-titanium iron ore was lower than that of ordinary iron ore, the ore blending cost of the present disclosure was reduced by 310 RMB per ton, and the $CO_2$ emissions was reduced by 35.2%.

Example 5: Furnace top gas Recirculation

The composition of the coke oven gas in steel plant is shown in Table 15 below.

Table 15: Composition of the coke oven gas in Example 5

| Composition | $H_2$ | CO | $N_2$ | $CO_2$ | $CH_4$ | $C_2H_2$ | $O_2$ |
|---|---|---|---|---|---|---|---|
| Mass percentage/% | 59.7 | 7.9 | 7.8 | 2.4 | 20.0 | 2.0 | 0.2 |

The composition of the reducing gas obtained after reforming the coke oven gas and water vapor in the heating furnace is shown in Table 16 below. The flow rate of the coke oven gas was 75 $m^3$/t, and the flow rate of the water vapor was 15.9 $m^3$/t.

Table 16: Composition of the reducing gas after reforming the coke oven gas in Example 5

| Composition | $H_2$ | CO | $N_2$ |
|---|---|---|---|
| Mass percentage/% | 67.9 | 27.4 | 4.7 |

The blast furnace was operated under the following conditions: a coke ratio of 0.26 t/t, a coal ratio of 0.07 t/t, and a tuyere oxygen injection rate of 191 $Nm^3$/t, the composition of the bosh gas generated within the furnace, derived from carbon combustion in the tuyere, direct reduction, and hot gas from the heating furnace, is shown in Table 17 below. The bosh gas volume was 1500 $m^3$/t.

Table 17: Composition of the bosh gas in Example 5

| Composition | $H_2$ | CO | $N_2$ |
|---|---|---|---|
| Mass percentage/% | 13.59 | 72.50 | 13.91 |

As the bosh gas rose, it underwent a reduction reaction with the iron oxides in the furnace, producing metallic iron, $H_2O$, and $CO_2$. When the gas reached the furnace top, the composition of the top gas is shown in Table 18 below. The top gas volume is 1500 $m^3$/t.

Table 18: Composition of the top gas in Example 5

| Composition | $H_2$ | CO | $N_2$ | $CO_2$ | $H_2O$ |
|---|---|---|---|---|---|
| Mass percentage/% | 8.44 | 43.58 | 13.91 | 28.92 | 5.15 |

The composition of the purified gas after removing $CO_2$, $H_2O$, and dust from the top gas is shown in Table 19 below. The purified gas volume was 989 $m^3$/t. It can be seen that $N_2$ is enriched in the purified gas. In a case that no portion of $N_2$ is discharged, $N_2$ will be further enriched to over 25% after one or more cycles of recycling. Therefore, 55 $m^3$/t of the 989 $m^3$/t of the purified gas is exported to other users, and 934 $m^3$/t of the purified gas was transported to the heating furnace for heating and then is supplied to the blast furnace for recycling. However, the 934 $m^3$/t of the purified gas cannot meet the blast kinetic energy requirements of the blast furnace, so a portion of the coke oven gas reformate is supplemented. The supplemental coke oven gas reformat served two purposes: first, it increased blast kinetic energy and ensured furnace activity; second, it diluted the $N_2$ content of the gas within the furnace.

Table 19: Composition of the purified gas of Example 5

| Composition | $H_2$ | CO | $N_2$ |
|---|---|---|---|
| Mass percentage/% | 12.81 | 66.10 | 21.09 |

The 934 $m^3$/t of the purified gas entered the next cycle of recycling process: In the gas heating furnace, the purified gas with a $N_2$ content of 21.09% is mixed with the coke oven gas reformat with a $N_2$ content of 4.7% to form the high-temperature reducing gas, which is then fed into the furnace. The mixed gas is then mixed with the CO generated by the combustion and reduction reactions of carbon in the furnace to form the bosh gas with a $N_2$ content of 13.91%. Through the repeated cycle, the $N_2$ content in the furnace gas stabilizes at approximately 13.91%.

In summary, the smelting method of the present disclosure achieves the blast furnace smelting with the following technical effects: the proportion of the vanadium-titanium iron ore in the blast furnace is greater than 60%, a mass fraction of $TiO_2$ in the blast furnace slag is > 15% and < 45%, and $CO_2$ emissions is reduced by more than 30%.

While specific embodiments of the present disclosure have been described in detail with reference to the accompanying drawings, this should not be construed as limiting the scope of protection of the patent. Within the scope of the claims, various modifications and variations that can be made by those skilled in the art without inventive effort remain within the scope of protection of the patent.

**Claims**

1. A method for smelting high-proportion vanadium-titanium iron ore in oxygen blast furnace, comprising the following steps:

   conducting pure oxygen injection in the blast furnace, and injecting pure oxygen, hot gas and pulverized coal through a tuyere; and
   charging iron-bearing material and coke from a top of the blast furnace;
   wherein a volume percentage of $N_2$ in the top gas is <25%, and the top gas is recycled after removing $CO_2$;
   the iron-bearing material is pellet ore, or pellet ore and at least one of the following materials: sintered ore and lump ore;
   the pellet ore has a $TiO_2$ content of 3%-13%, an iron raw material used for producing the pellet ore is vanadium-titanium iron ore, a mass proportion of the pellet ore in the iron-bearing material charged into the blast furnace is >30%, and a mass fraction of $TiO_2$ in the sintered ore is <5%; and
   a mass fraction of $TiO_2$ in blast furnace slag produced by smelting is >15% and <45%, a proportion of vanadium-titanium iron ore in the blast furnace is >60%, and a $CO_2$ emission of the blast furnace is reduced by 30%.

2. The method for smelting high-proportion vanadium-titanium iron ore in oxygen blast furnace according to claim 1, wherein the hot gas is gas heated in a gas heating furnace, a gas source in the gas heating furnace comprises coke oven gas, water vapor, and purified gas, wherein a flow rate of the coke oven gas fed into the gas heating furnace is 20 $Nm^3$/t to 200 $Nm^3$/t, and a molar ratio of the water vapor to the coke oven gas fed into the heating furnace is 0.10 to 0.30:1.

3. The method for smelting high-proportion vanadium-titanium iron ore in oxygen blast furnace according to claim 1, wherein in the blast furnace smelting process,

   when the mass fraction of $TiO_2$ in the blast furnace slag is > 15% and $\leq$ 18%, a sum of a mass fraction of [Si] and a mass fraction of [Ti] in molten iron is $\geq$ 0.4% and $\leq$ 0.8%;
   when the mass fraction of $TiO_2$ in the blast furnace slag is > 18% and $\leq$ 20%, the sum of the mass fraction of [Si] and the mass fraction of [Ti] in the molten iron is $\geq$ 0.3% and $\leq$ 0.7%;
   when the mass fraction of $TiO_2$ in the blast furnace slag is > 20% and $\leq$ 25%, the sum of the mass fraction of [Si] and the mass fraction of [Ti] in the molten iron is $\geq$ 0.10% and $\leq$ 0.6%;
   when the mass fraction of $TiO_2$ in the blast furnace slag is > 25%, the sum of the mass fraction of [Si] and the mass fraction of [Ti] in the molten iron is $\geq$ 0.05% and $\leq$ 0.55%.

4. The method for smelting high-proportion vanadium-titanium iron ore in oxygen blast furnace according to claim 1, wherein a mass ratio of the blast furnace iron-bearing material to coke is 5.5 to 7.5:1, and a mass ratio of the blast furnace iron-bearing material to pulverized coal is 15 to 40:1; in the blast furnace smelting, a blast furnace fuel ratio is < 400kg/t, and a coke ratio is < 300kg/t.

5. The method for smelting high-proportion vanadium-titanium iron ore in oxygen blast furnace according to claim 1, wherein in the blast furnace smelting process, a distribution coefficient of vanadium in molten iron and slag $[V]/(V_2O_5)$ is >1.1.

6. The method for smelting high-proportion vanadium-titanium iron ore in oxygen blast furnace according to claim 1, wherein a flow rate of the hot gas injected is $700Nm^3/t$ to $1280Nm^3/t$, and a flow rate of the pure oxygen injected is $145Nm^3/t$ to $245Nm^3/t$.

7. The method for smelting high-proportion vanadium-titanium iron ore in oxygen blast furnace according to claim 1, wherein a method of charging the iron-bearing material and coke is as follows:
at a blast furnace burden surface height, taking a horizontal cross-section of the blast furnace and dividing a circle where the cross-section is located into 11 equal-area circular rings, which are numbered in sequence from the inner ring to the outer ring, wherein a distribution system is as follows: 60% to 80% of the coke is distributed in the $9^{th}$ to $11^{th}$ rings and the $1^{st}$ to $5^{th}$ rings, 20%-40% of the coke is distributed in the $6^{th}$ to $8^{th}$ rings, 70%-90% of the iron-bearing material is distributed in the $4^{th}$ to $10^{th}$ rings, and 10%-30% of the iron-bearing material is distributed in the $1^{st}$ to $3^{rd}$ rings and the $11^{th}$ ring.

FIG. 1

## INTERNATIONAL SEARCH REPORT

| International application No. |
|---|
| **PCT/CN2025/102992** |

| | |
|---|---|
| **A. CLASSIFICATION OF SUBJECT MATTER** | |
| C21B5/00(2006.01)i; C21B5/04(2006.01)i; C21B5/06(2006.01)i | |
| According to International Patent Classification (IPC) or to both national classification and IPC | |

| **B. FIELDS SEARCHED** |
|---|
| Minimum documentation searched (classification system followed by classification symbols) |
| IPC:C21B |
| Documentation searched other than minimum documentation to the extent that such documents are included in the fields searched |
| |
| Electronic data base consulted during the international search (name of data base and, where practicable, search terms used) |
| CNKI, CNABS, CNTXT, ENTXTC, CNABS, CNKI: 全氧, 纯氧, 高炉, 钒, 钛, 炉料结构, oxygen fuel, pure oxygen, blast furnace, vanadium, titanium, burden, furnace charge |

| **C. DOCUMENTS CONSIDERED TO BE RELEVANT** | | |
|---|---|---|
| Category* | Citation of document, with indication, where appropriate, of the relevant passages | Relevant to claim No. |
| PX | CN 119082390 A (PANGANG GROUP XICHANG STEEL AND VANADIUM CO., LTD.) 06 December 2024 (2024-12-06) claims 1-7 | 1-7 |
| Y | CN 114807470 A (PANGANG GROUP PANZHIHUA IRON & STEEL RESEARCH INSTITUTE CO., LTD.) 29 July 2022 (2022-07-29) description, embodiment 1, and table 2 | 1-7 |
| Y | CN 117512242 A (XINJIANG BAYI IRON & STEEL CO., LTD.) 06 February 2024 (2024-02-06) description, paragraphs 26-27 | 1- |
| Y | JP 2015193927 A (JFE STEEL CORP.) 05 November 2015 (2015-11-05) claims 1-4 | 1- |
| Y | JP 2017053029 A (JFE STEEL CORP.) 16 March 2017 (2017-03-16) claims 1-4 | 1-7 |
| A | CN 104762429 A (PANGANG GROUP PANZHIHUA IRON & STEEL RESEARCH INSTITUTE CO., LTD.) 08 July 2015 (2015-07-08) entire document | 1-7 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 September 2025** | **18 September 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

International application No.

**PCT/CN2025/102992**

| Patent document cited in search report | | | Publication date (day/month/year) | Patent family member(s) | | | Publication date (day/month/year) |
|---|---|---|---|---|---|---|---|
| CN | 119082390 | A | 06 December 2024 | None | | | |
| CN | 114807470 | A | 29 July 2022 | None | | | |
| CN | 117512242 | A | 06 February 2024 | None | | | |
| JP | 2015193927 | A | 05 November 2015 | None | | | |
| JP | 2017053029 | A | 16 March 2017 | JP | 6354962 | B2 | 11 July 2018 |
| CN | 104762429 | A | 08 July 2015 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410846712